## Europäisches Patentamt

## European Patent Office

## Office européen des brevets

(19)

(11) Veröffentlichungsnummer: **0 254 227**
**A2**

(12) **EUROPÄISCHE PATENTANMELDUNG**

(21) Anmeldenummer: **87110400.6**

(22) Anmeldetag: **17.07.87**

(51) Int. Cl.³: **G 01 N 30/90**

(30) Priorität: **21.07.86 CH 2908/86**

(43) Veröffentlichungstag der Anmeldung:
**27.01.88 Patentblatt 88/4**

(84) Benannte Vertragsstaaten:
**CH DE FR GB LI**

(71) Anmelder: **Petazon AG**
**Baarerstrasse 59**
**CH-6300 Zug(CH)**

(72) Erfinder: **Nyiredy, Szabolcs**
**Clausiusstrasse 25**
**CH-8092 Zürich(CH)**

(72) Erfinder: **Meszaros, Sàndor**
**Fogarasi ut 74b**
**Budapest(HU)**

(72) Erfinder: **Sticher, Otto**
**Clausiusstrasse 25**
**CH-8092 Zürich(CH)**

(72) Erfinder: **Nyiredy, Klara**
**Clausiusstrasse 25**
**CH-8092 Zürich(CH)**

(72) Erfinder: **Dallenbach, Karin**
**Weinmanngasse 84**
**CH-8700 Küsnacht(CH)**

(74) Vertreter: **Hunziker, Jean et al,**
**Patentanwaltsbureau Jean Hunziker Schulhausstrasse 12**
**CH-8002 Zürich(CH)**

(54) Planar-Zentrifugal-Chromatographieeinrichtung.

(57) Die Einrichtung besteht aus einer Kammer (2) mit einem darin als chromatographisches Trennelement ausgebildeten und sich drehenden Rotor (3) mit Tragplatte (8) und darauf kreisförmig angeordnetem adsorbierenden Medium (4). Oberhalb des Mediums befindet sich ein Deckel (9).

Zwecks Sicherns des gleichmässig verteilten Eindringens des Lösungsmittels in das adsorbierende Medium ist oberhalb dieses Mediums ein auf dasselbe pressender Ring (5) aus inertem Material angeordnet. Der äussere Durchmesser des Ringes ist beliebig, hingegen bestimmt die Höhe des Ringes die Menge des einzuspeisenden Lösungsmittels.

Fig.1

EP 0 254 227 A2

./...

Fig.2

Petazon AG, Zug

# Planar-Zentrifugal-Chromatographieeinrichtung

Die Erfindung betrifft eine Planar-Zentrifugal-Chromatographieeinrichtung, bestehend aus einer Kammer mit einem darin als chromatographisches Trennelement ausgebildeten, sich drehenden Rotor mit einer Tragplatte und darauf kreisförmig angeordnetem sorbierendem Medium, sowie mit einem oberhalb des sorbierenden Mediums angeordneten Deckel.

Eine Einrichtung diesen Typs ist in der schweizerischen Patentanmeldung Nr. 1588/85 beschrieben, bei welcher das Abführen des Lösungsmittels mit einer Auffangvorrichtung gelöst ist die mit dem Rotor auf einer gemeinsamen Welle fest montiert ist und jeder einzelne Innenpunkt der Auffangvorrichtung von der Rotationsachse weiter entfernt ist als der von der Rotationsachse meistentfernte Punkt des adsorbierenden
Mediums des Rotors.

Bei den Planar-Zentrifugal-Chromatographieeinrichtungen
muss man aufgrund der zentrifugalen Beschleunigung
zwei entscheidende Faktoren beachten.

Erstens resultiert aus der Rotationsbewegung eine
relativ grosse Verdunstung der mobilen Phase. Diese
äussert sich in den folgenden drei Phänomenen: dem
sogenannten Oberflächeneffekt, dem Effekt der stehenden
Front, der Veränderung der mobilen Phase.

Zweitens wird die mobile Phase im Unterschied zur
präparativen Schichtchromatographie auf die Schicht
aufgetragen und wieder aus der stationären Phase
herausgeleitet.

Als Folge der Verdunstung verläuft der Lösungsmittelstrom nicht nur parallel zur Platte in der Schicht,
sondern auch in Richtung des Dampfraumes. Ein grosser
Teil des Lösungsmittels, das in der Nähe der Oberfläche migriert, wird in den Dampfraum verdunstet,
dadurch verändert sich hier der Einfluss des Lösungsmittels auf die Trennung. Das im Sorbens migrierende
Lösungsmittel ist entscheidend für die Trennung. So
wird die Migration der Substanzen von diesen beiden
Effekten beeinflusst. Deshalb werden die zu trennenden
Komponenten im Laufe der Trennung entlang des Radius
immer näher in Richtung der Oberfläche migrieren.

Der sogenannte Effekt der stehenden Front tritt im
Verlauf des chromatographischen Prozesses auf, d.h.
während der Migration der $\alpha$-Front wird die mit
Lösungsmittel bedeckte Oberfläche ständig vergrössert,

proportional dazu erhöht sich die pro Zeiteinheit verdunstete Menge der mobilen Phase. Wenn während der chromatographischen Entwicklung die verdunstete Menge der mobilen Phase genau so gross wird, wie die Menge des nachfliessenden Lösungsmittels, migriert die $\alpha$-Front trotz des Lösungsmittelsnachschubs nicht weiter. Da der chromatographische Prozess trotzdem weiterläuft, werden die nachfliessenden Substanzzonen in Richtung der $\alpha$-Front verschoben, d.h. am Anfang schon getrennte Substanzzonen treffen wieder aufeinander.

Wird die Trennung mit einem Mehrkomponenten-Lösungsmittel durchgeführt, verändert sich während des chromatographischen Prozesses aufgrund der Verdunstung die Zusammensetzung der mobilen Phase, d.h. das Verhältnis der einzelnen Komponenten untereinander wird verschoben. Generell bedeutet das eine Anreicherung der polaren Komponenten, da diese weniger flüchtig sind. Somit werden die Eigenschaften der mobilen Phase z.B. Lösungsstärke, Selektivität verändert.

Das Ziel der Erfindung ist die Weiterentwicklung der in der Einleitung beschriebenen bekannten Einrichtung.

Die Aufgabe der Erfindung ist eine Lösung zustandezubringen, die die vorher erwähnten Phänomene beseitigt und sichert, dass das Lösungsmittel in das sorbierende Medium hineindringt, in diesem gleichmässig verteilt wird und das sorbierende Medium mit einer konstanten Geschwindigkeit durchströmt, und weiterhin die Verdunstung des Lösungsmittels behindert.

Diese Aufgabe wird bei einer Planar-Zentrifugal-Chromatographieeinrichtung der eingangs genannten Art dadurch gelöst, dass oberhalb des sorbierenden Mediums ein Ring aus inertem Material, vorzugsweise aus Teflon, mit einem beliebigen inneren Radius und mit einer Höhe, die durch die Menge des einzuspeisenden Lösungsmittels bestimmt ist, angeordnet ist und der Ring auf die Oberfläche des sorbierenden Mediums gepresst ist.

Vorteilhafterweise weist der Ring einen sich vom sorbierenden Medium ausgehend nach oben, entlang der Höhe des Ringes verringernden inneren Radius auf und der äussere Durchmesser des Ringes ist höchstens mit dem Durchmesser der Tragplatte identisch und der Ring ist an seinem äusseren Rand zu der Tragplatte befestigt.

Nach einer weiteren vorteilhaften Ausführung ist in der Oberfläche des sorbierenden Mediums mindestens eine die Durchflussgeschwindigkeit des Lösungsmittels beeinflussende Bahn ausgebildet.

Der Vorteil der erfindungsgemässen Planar-Zentrifugal-Chromatographieeinrichtung ist, dass mit Hilfe des Ringes immer so viel Lösungsmittel in das sorbierende Medium eingebracht werden kann, wie viel durch dessen Querschnitt durchströmen kann und ausserdem der Ring das Lösungsmittel in das sorbierende Medium hineinzwingt. Der Ring erlaubt nämlich nicht, dass das Lösungsmittel über dem sorbierenden Medium ströme. Der die Oberfläche des sorbierenden Mediums unmittelbar bedeckende Ring, der gleichzeitig die Rolle eines Deckels spielt, behindert die Verdunstung des Lösungs-Mittels.

Falls das Lösungsmittel auf das sorbierende Medium

0254227

aufgebracht und mit Hilfe des speziellen Ringes in das sorbierende Medium eingetragen wurde, so ist die Einspeisungsgeschwindigkeit des Lösungsmittels konstant, doch durchströmt es die Schicht des sorbierenden Mediums nicht mit einer konstanten linearen Geschwindigkeit, sondern verlangsamt sich quadratisch, da sich die Oberfläche des sorbierenden Mediums quadratisch erhöht. Die Strömungsgeschwindigkeit kann konstant gemacht werden, falls in dem sorbierenden Medium bzw. in dessen Oberfläche eine spezielle Bahn ausgebildet wird. So eine spezielle Bahn können z.B. Kanäle von gleicher Breite bilden, die radial von innen nach aussen speichenartig ausgebildet sind. Falls die Einspeisung des Lösungsmittels mit konstanter Geschwindigkeit geschieht, so wird die Strömungsgeschwindigkeit des Lösungsmittels von dem inneren Ende der Bahn, wo sich auch die eluierenden Stoffe befinden, radial nach aussenhin in Richtung des äusseren Umfanges konstant sein.

Die Bahn kann auch derart ausgebildet werden, dass in dem sorbierenden Medium zwei einander gegenüber angeordnete kreissektorförmige Bahnen ausgebildet werden, wodurch sich die Geschwindigkeit, die sich im Quadrat des Radiusabstandes verringert, der Konstanten nähert.

Bei einer weiteren Lösung wird in der Oberfläche des sorbierenden Mediums eine Spiralbahn ausgebildet, wodurch eine extrem grosse Elution-entfernung gesichert werden kann, da die Breite des durch die Spiralbahn bestimmten Trennweges überall identisch ist. Auf diese Weise wird die Strömungsgeschwindigkeit nahezu konstant sein.

Im Folgenden wird die Erfindung anhand der Zeichnungen

näher erläutert.

Es zeigen rein schematisch

Fig. 1 eine Seitenansicht einer erfindungsgemässen Planar-Zentrifugal-Chromatographieeinrichtung, teilweise im Schnitt,

Fig. 2 einen Schnitt nach der Linie II-II in Fig. 1,

Fig. 3 den erfindungsgemässen Ring in Seitenansicht, teilweise im Schnitt,

Fig. 4 die in dem sorbierenden Medium ausgebildete Bahn in Draufsicht,

Fig. 5 eine weitere Ausführungsform der in dem sorbierenden Medium ausgebildeten Bahn in Draufsicht, und

Fig. 6 eine weitere Ausführungsform der in dem sorbierenden Medium ausgebildeten Bahn in Draufsicht.

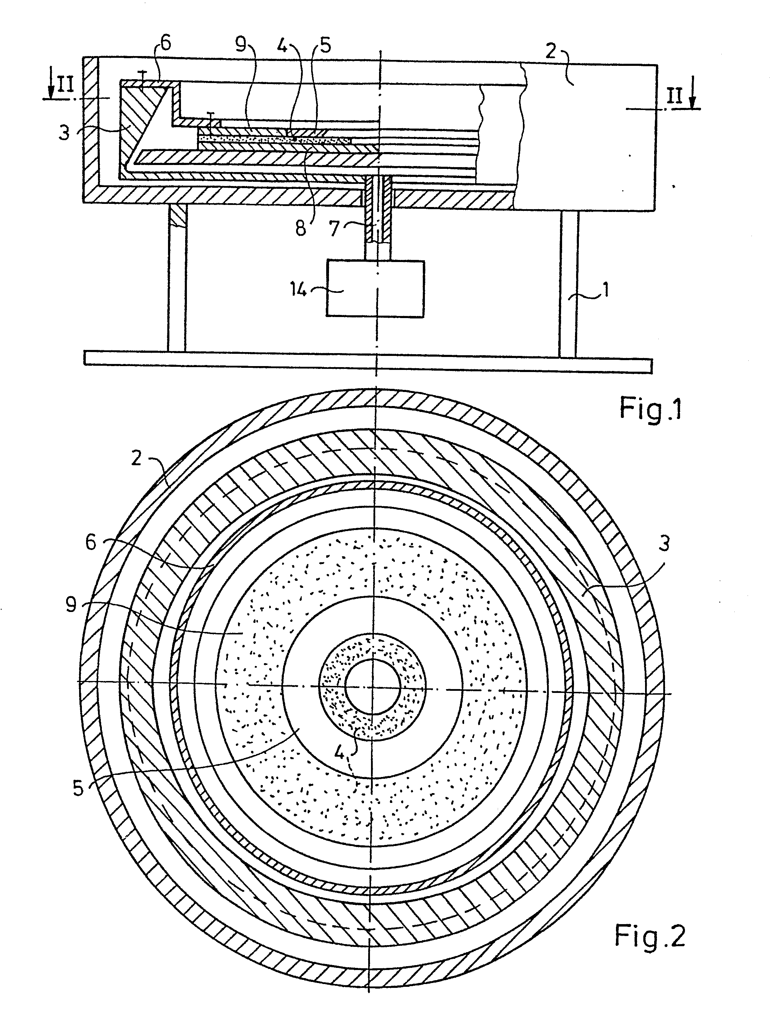

Die erfindungsgemässe Planar-Zentrifugal-Chromatographieeinrichtung gemäss Fig. 1 und 2 besteht aus einer an sich bekannten Kammer 2, die auf einem Gestell 1 waagerecht angeordnet ist. In der Kammer 2 ist ein Rotor 3 angeordnet, der um eine Welle 7 mit Hilfe eines Motors 14 drehbar ist. Der Rotor 3 ist ebenfalls waagerecht angeordnet und enthält ein adsorbierendes Medium 4, welches sich mit dem Rotor 3 zusammen dreht. Der Rotor 3 kann auf herkömmliche Weise ausgebildet sein, dann wird das sorbierende Medium 4 als Kreisring auf eine kreisförmige Glasscheibe als Tragplatte 8 aufgetragen.

Selbstverständlich können sowohl die Kammer 2 als auch der Rotor 3 schräg angeordnet sein.

Über dem sorbierenden Medium 4 ist auf die Welle 7 ein Ring 5 montiert. Bei der Wahl des Materials des Ringes ist die einzige Voraussetzung, dass das Lösungsmittel bzw. dessen Dampf das Material des Ringes nicht angreift. Der Ring 5 ist im allgemeinen aus einem inerten Stoff, z.B. aus Teflon, hergestellt, kann aber auch aus durchsichtigem Stoff, z.B. Glas oder Metall verfertigt werden.

Die Höhe h des Ringes 5 wird durch die Menge des einzuspeisenden Lösungsmittels bestimmt. Der innere Radius R des Ringes 5 ist derart ausgebildet, dass sich dieser von dem sorbierenden Medium ausgehend nach oben entlang der Höhe h des Ringes 5 verringert, wodurch die Innenfläche des Ringes 5 schräg abfällt. Der äussere Durchmesser D des Ringes 5 wird dadurch bestimmt, dass dieser nicht grösser sein kann, als der Durchmesser der Tragplatte 8. Die Dicke v des Ringes 5 kann minimal sein, prinzipiell könnte diese Dicke v 1 - 2 mm sein, in der Praxis beträgt die Dicke v im allgemeinen 3 - 5 mm.

Der Ring 5 kann auf der Oberfläche der Tragplatte 8 an beliebiger Stelle angebracht werden, d.h. der innere Radius R des Ringes 5 ist von beliebiger Grösse.

Der Ring 5 ist auf irgendeine an sich bekannte Weise auf das sorbierende Medium 4 gepresst.

Falls der Ring 5 nicht die ganze Oberfläche des sorbierenden Mediums 4 bedeckt, dann wird der Teil des sorbierenden Mediums, der zwischen dem äusseren Umfang des Ringes 5 und dem äusseren Umfang der Tragplatte 8 vorhanden ist, mit einem separaten Glasdeckel 9 abgedeckt, der unmittelbar über dem sorbierenden Medium 4 angebracht ist und an seinem Rand zu der Tragplatte 8 befestigt ist.

Falls der äussere Durchmesser D des Ringes 5 mit dem Durchmesser der Tragplatte 8 identisch ist, dann ist der Ring 5 am Rand des Deckels 9 mit Hilfe von Befestigungselementen 6 zu der Tragplatte 8 befestigt. In diesem Fall erfüllt der Ring 5 die Rolle eines unmittelbar über dem sorbierenden Medium 4 angebrachten Deckels 9.

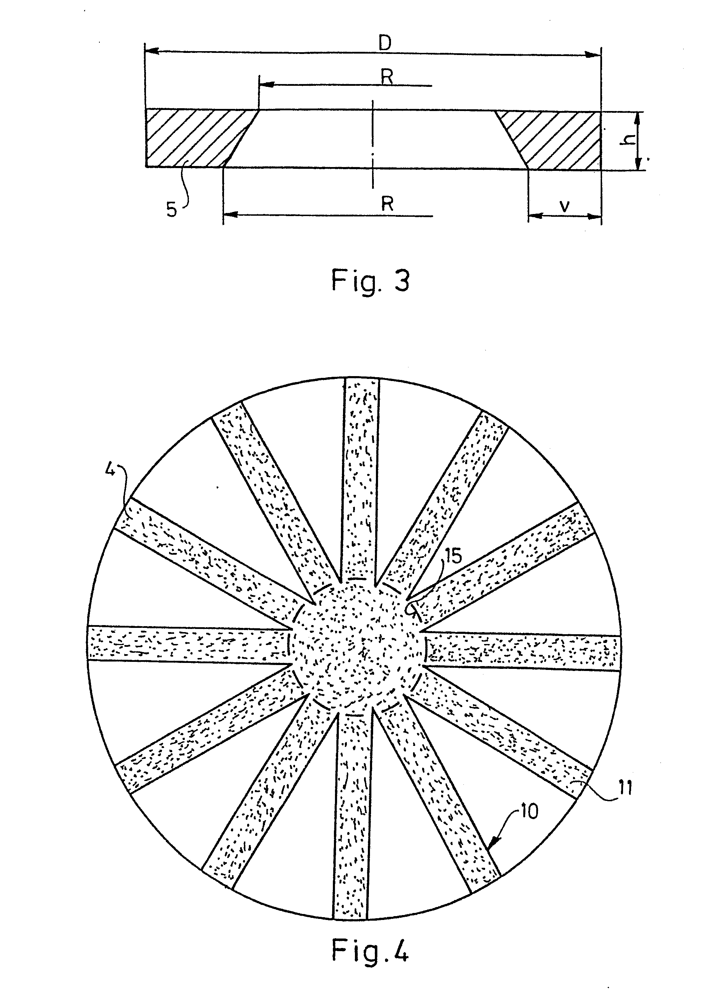

In dem sorbierenden Medium 4 bzw. auf dessen Oberfläche ist eine spezielle Bahn 10 ausgebildet, mit welcher die Strömungsgeschwindigkeit des Lösungsmittels beeinflusst werden bzw. praktisch konstant gemacht werden kann. Einige Variationen für die Bahn 10 sind in den Figuren 4., 5., 6. dargestellt.

In Fig. 4 ist eine Bahn 10 dargestellt, bei welcher von der Tragplatte 8 das sorbierende Medium 4 in kreissektorförmigen Teilen entfernt wurde, und auf diese Weise eine speichenartige Bahn 11 ausgebildet wird.

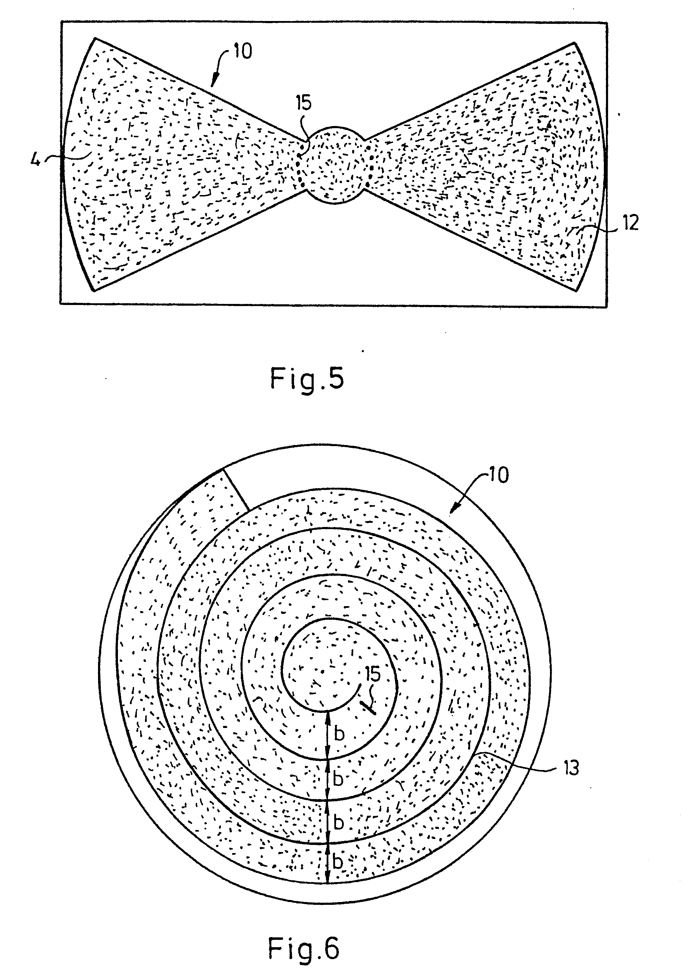

In Fig. 5 ist eine Lösung dargestellt, bei welcher die Bahn 10 aus zwei Kreissektoren 12 ausgebildet wird. Die verjüngenden Enden der Kreissektoren liegen nahe der Welle 7, wobei die längeren Kreisbogen an dem äusseren Umfang liegen.

In Fig. 6 ist eine Ausführung dargestellt, bei welcher die Bahn aus einer in der Oberfläche des sorbierenden Mediums 4 ausgehöhlten Spirale besteht. Die Breite b des durch die Spiralbahn 13 bestimmten Trennweges ist konstant. Die eine innere Fläche der Spirale 13 ist mit Imprägnierungsstoff überzogen.

Die erfindungsgemässe Planar-Zentrifugal-Chromatographieeinrichtung arbeitet wie folgt:

Die zu trennende Probe 15 wird auf den Mittelteil des sich drehenden Rotors 3 in an sich bekannter Weise aufgebracht und durch eine mit Hilfe der Zentrifugalkraft zustandegebrachten Elution dadurch getrennt, dass die Probe und das Lösungsmittel das sorbierende Medium 4 durchströmen.

Falls der Rotor stehend angeordnet ist, kann das zu trennende Gemisch auf den äusseren Umfang des Rotors 3 aufgebracht werden. Dann durchströmt das Gemisch das sorbierende Medium 4 in Richtung des Mittelpunktes des Rotors 3 mit Hilfe der Kapillarkraft.

Der über dem sorbierenden Medium 4 angebrachte und auf das sorbierende Medium gepresste Ring 5 zwingt das Lösungsmittel in das sorbierende Medium und lässt das Lösungsmittel nicht über das Medium fliessen. Da der Ring 5 auch die Rolle eines Deckels 9 erfüllt, kann das Lösungsmittel nicht verdunsten.

Die Bedeutung des Ringes 5 erhöht sich bei der Erhöhung der Umdrehungszahl des Rotors 3, da damit wesentlich mehr Lösungsmittel in das sorbierende Medium 4 eingeführt werden kann als mit der herkömmlichen Einrichtung bei welcher kein Ring 5
auf das sorbierende Medium 4 gepresst ist.

Die in dem sorbierenden Medium 4 ausgebildete Bahn
10 sichert, dass das Lösungsmittel das sorbierende
Medium 4 mit konstanter Geschwindigkeit durchströmt.

Falls eine grössere Menge Lösungsmittel eingespeist
werden soll, kann die Höhe h des Ringes 5 erhöht
werden. Falls weniger Lösungsmittel eingespeist
werden soll, kann die Höhe h des Ringes 5 geringer
gewählt werden.

Die erfindungsgemässe Planar-Zentrifugal-Chromatographieeinrichtung kann sowohl für analytische, als auch für
präparative Trennungen angewendet werden.

Patentansprüche:

1. Planar-Zentrifugal-Chromatographieeinrichtung, bestehend aus einer Kammer mit einem darin als chromatographisches Trennelement ausgebildeten, sich drehenden Rotor mit einer Tragplatte und darauf kreisförmig angeordnetem sorbierendem Medium, sowie mit einem oberhalb des sorbierenden Mediums angeordneten Deckel, dadurch gekennzeichnet, dass oberhalb des sorbierenden Mediums /4/ ein Ring /5/ aus inertem Material, vorzugsweise aus Teflon, mit einem beliebigen inneren Radius /R/ und mit einer Höhe /h/, die durch die Menge des einzuspeisenden Lösungsmittels bestimmt ist, angeordnet ist und der Ring /5/ auf die Oberfläche des sorbierenden Mediums /4/ gepresst ist.

2. Planar-Zentrifugal-Chromatographieeinrichtung nach Anspruch 1, dadurch gekennzeichnet, dass der Ring /5/ einen sich vom sorbierenden Medium /4/ ausgehend nach oben, entlang der Höhe /h/ des Ringes /5/ verringernden inneren Radius /R/ aufweist.

3. Planar-Zentrifugal-Chromatographieeinrichtung nach Anspruch 1 oder 2, dadurch gekennzeichnet, dass der äussere Durchmesser /D/ des Ringes /5/ höchstens mit dem Durchmesser der Tragplatte /8/ identisch ist und der Ring /5/ an seinem äusseren Rand zu der Tragplatte /8/ befestigt ist.

4. Planar-Zentrifugal-Chromatographieeinrichtung nach einem der Ansprüche 1 bis 3, dadurch gekennzeichnet, dass in der Oberfläche des sorbierenden Mediums /4/ mindestens ein die Durchflussgeschwindigkeit des Lösungsmittels beeinflussende Bahn /10/ ausgebildet ist.

Fig.1

Fig.2

Fig. 3

Fig.4

Fig.5

Fig.6